# EUROPEAN PATENT APPLICATION

(11) **EP 3 001 536 A1**
(43) Date of publication of application: **30.03.2016**
(21) Application number: 14801725.4
(22) Date of filing: 04.02.2014
(51) Int. Cl.: H02J 13/00, H04B 3/54

(54) **COMMUNICATION SYSTEM, METHOD FOR CONTROLLING POWER SUPPLY, AND NON-TRANSITORY COMPUTER READABLE MEDIUM FOR CONTROLLING POWER SUPPLY**

(30) Priority: 23.05.2013 JP 2013109019
(71) Applicant: NEC Corporation, Tokyo 108-8001 (JP)
(72) Inventor: YAMADA, Shigeo, Tokyo 108-8001 (JP)
(74) Representative: Glawe, Delfs, Moll
(86) International application number: PCT/JP2014/000568
(87) International publication number: WO 2014/188633

(57) **Abstract**

A communication system including power supplies (13) and (23) for operating, for example, an indoor communication apparatus (1) and an outdoor communication apparatus (2) connected to each other by a communication line, the power supplies (13) and (23) being provided in the indoor communication apparatus (1) and the outdoor communication apparatus (2), respectively, and capable of transmitting power from each power supply to a counterpart communication apparatus via a communication line is provided. The communication system includes the indoor communication apparatus (1) and the outdoor communication apparatus (2) connected to each other via a communication line (3) that exchanges a signal. An indoor power supply (13) as a first power supply and an outdoor power supply (23) as the first power supply can be respectively connected to the indoor communication apparatus (1) and the outdoor communication apparatus (2), and the indoor communication apparatus (1) and the outdoor communication apparatus (2) are able to transmit power to the counterpart communication apparatus via the communication line (3) as a second power supply in such a way that the power is superimposed on the signal. Further, the indoor communication apparatus (1) and the outdoor communication apparatus (2) respectively include a power supply selection circuit (12) and a power supply selection circuit (22) that select, according to the state of the power in the first power supply and the second power supply, one of the first power supply and the second power supply as an operating power supply and are supplied with the power that has been selected.

## Description

### Technical Field

The present invention relates to a communication system, a power supply control method, and a power supply control non-transitory computer readable medium, and more specifically, to a communication system, a power supply control method, and a power supply control non-transitory computer readable medium including a mechanism capable of supplying power bidirectionally between an indoor communication apparatus and an outdoor communication apparatus via a communication line.

### Background Art

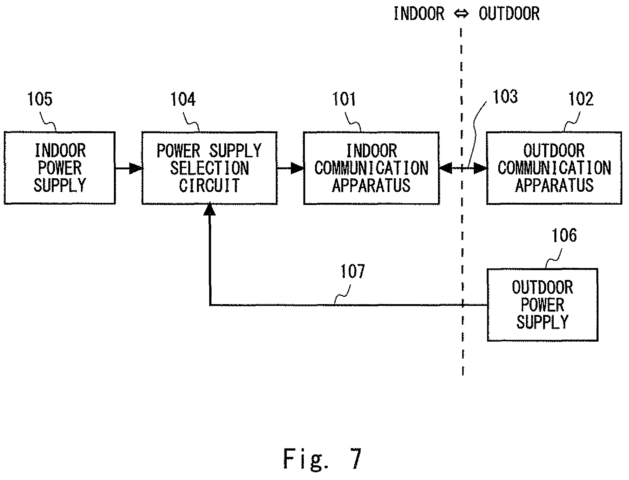

In recent years, a technique for constructing a communication system by a plurality of function modules that have been divided may be employed according to an improvement made in the functionality of the communication system. For example, Japanese Unexamined Patent Application Publication No. 2002-359579 (Patent Literature 1), titled "CABLE EQUALIZATION SYSTEM IN COMMUNICATION APPARATUS" discloses a communication system that is separated into an outdoor communication apparatus (ODU: Out Door Unit) and an indoor communication apparatus (IDU: In Door Unit). In the communication system according to Patent Literature 1, the outdoor communication apparatus is installed outdoors and includes a function of transmitting and receiving a high-frequency radio signal and the indoor communication apparatus is installed indoors and includes a function of generating and decoding transmission/reception signals. In the communication system having the above configuration, when power is supplied from the indoor communication apparatus (IDU) having an indoor power supply to the outdoor communication apparatus (ODU), a technique for superimposing power on a communication line such as a co-axial cable that has originally been provided to send signals and supplying power to the counterpart outdoor communication apparatus (ODU) has recently been employed. Further, various attempts have been made to draw an outdoor power supply that uses wind power generation, photovoltaic power generation or the like to an inside via a power supply line as shown in Fig. 7, for example, to supply power to the indoor communication apparatus (IDU).

Fig. 7 is a system configuration diagram showing a configuration of a communication system according to related art when both the indoor power supply and the outdoor power supply are used. As shown in Fig. 7, an indoor communication apparatus 101 is configured to be supplied with power by one of an indoor power supply 105 and an outdoor power supply 106 that has been selected via a power supply selection circuit 104 and further transmit power to an outdoor communication apparatus 102 via a communication line 103 in such a way that the power is superimposed on a signal. That is, both the indoor power supply 105 connected to a power supply plug such as a commercial power supply and the outdoor power supply 106 such as wind power or solar cell drawn from outdoors via a power supply line 107 are connected to the power supply selection circuit 104 and power is supplied to the indoor communication apparatus 101 from one of the indoor power supply 105 and the outdoor power supply 106 that has been selected.

By employing the configuration as shown in Fig. 7, the indoor communication apparatus 101 and the outdoor communication apparatus 102 that constitute the communication system are able to operate not only by means of the indoor power supply 105 but also by means of the outdoor power supply 106 according to the selection operation by the power supply selection circuit 104.

### Citation List

### Patent Literature

[Patent-Literature 1] Japanese Unexamined Patent Application Publication No. 2002-359579 (Pages 3-4)

### Summary of Invention

### Technical Problem

In the communication system according to the related art as shown in Fig. 7, a power input mechanism to take in the power from the power supply is included only in the indoor communication apparatus 101, and power is supplied to the outdoor communication apparatus 102 via the communication line 103 while being superimposed on the signal from the indoor communication apparatus 101. Therefore, when the outdoor power supply 106 that uses wind power generation, photovoltaic power generation or the like is used in addition to the indoor power supply 105, the power supply line 107 to draw power from outdoors to indoors is needed in addition to the communication line 103. Further, even when the outdoor power supply 106 is installed near the outdoor communication apparatus 102, the indoor communication apparatus 101 that has drawn the outdoor power supply 106 via the power supply line 107 supplies power to the outdoor communication apparatus 102 via the communication line 103. This increases the power transmission distance and causes a power transmission loss.

When such a configuration in which the outdoor communication apparatus 102 newly includes a power input mechanism to take in the power from the outdoor power supply 106 (e.g., solar cell) and the power from the solar cell is supplied only to the outdoor communication apparatus 102, not to the indoor communication apparatus 101, is employed in order to eliminate the power supply line 107, when a power failure or the like occurs in the indoor power supply 105 (e.g., commercial power supply) and the power supply to the indoor communication apparatus 101 from the indoor power supply 105 is stopped, even when the power generation ability of the solar cell as the outdoor power supply 106 is sufficiently high, power cannot be supplied to the indoor communication apparatus 101 from the outdoor power supply 106.

Further, in the technique for superimposing power on an Ethernet (registered trademark) communication line that is defined as a Power over Ethernet (PoE) (registered trademark) in the IEEE802.3 standard, the power to be transmitted to the communication line is gradually increased to check whether it is possible to supply power to the communication line when a power supply is turned on. However, when only the operation for gradually increasing the transmission power just after the power supply is turned on is implemented, the power superimposed on the communication line may not reach the amount of power that is necessary for the operation when the power from the power supply in the counterpart communication apparatus is interrupted. Therefore, even when the amount of power of the power supply is that required for the operations of not only one communication apparatus but also the counterpart communication apparatus, the counterpart communication apparatus can no longer be operated even using the power superimposed on the communication line and the operation of the counterpart communication apparatus may stop. Therefore, only the implementation of the PoE technique as the technique for superimposing the power on the communication line is not enough.

### (Objects of the Present Invention)

The present invention has been made in view of the aforementioned circumstances and aims to provide a communication system, a power supply control method, and a power supply control non-transitory computer readable medium capable of connecting a power supply to both a first communication apparatus (e.g., indoor communication apparatus) and a second communication apparatus (e.g., outdoor communication apparatus) that are connected to each other using a communication line and continuously operating the first communication apparatus and the second communication apparatus by allowing them to select a power supply that supplies power to the first communication apparatus and the second communication apparatus according to the state of the power output from each power supply.

### Solution to Problem

In order to solve the aforementioned problems, a communication system, a power supply control method, and a power supply control non-transitory computer readable medium according to the present invention mainly employ the following characteristic configurations.
(1) A communication system according to the present invention is a communication system including a first communication apparatus and a second communication apparatus that are connected to each other via a communication line that exchanges a signal, in which each of the first communication apparatus and the second communication apparatus is connected to a first power supply, which is a power supply included therein or an external power supply located nearby, superimposes power on the signal in the communication line and transmits the power that is superimposed to a counterpart communication apparatus via the communication line as a second power supply, and the first communication apparatus and the second communication apparatus select one of the power from the first power supply and the power from the second power supply transmitted from the counterpart communication apparatus via the communication line as an operating power supply according to a state of the power in each of the first power supply and the second power supply and are supplied with the power that has been selected.
(2) A power supply control method according to the present invention is a power supply control method in a communication system including a first communication apparatus and a second communication apparatus that are connected to each other via a communication line that exchanges a signal, in which each of the first communication apparatus and the second communication apparatus is connected to a first power supply, which is a power supply included therein or an external power supply located nearby, superimposes power on the signal in the communication line, and transmits the power that is superimposed to a counterpart communication apparatus via the communication line as a second power supply, and the first communication apparatus and the second communication apparatus select one of the power from the first power supply and the power transmitted from the counterpart communication apparatus via the communication line as an operating power supply according to a state of the power in each of the first power supply and the second power supply and are supplied with the power that has been selected.
(3) A power supply control non-transitory computer readable medium according to the present invention executes the power supply control method described in (2) above as a non-transitory computer readable medium that can be executed by a computer.

### Advantageous Effects of Invention

According to a communication system, a power supply control method, and a power supply control non-transitory computer readable medium of the present invention, the following effects can be obtained.

That is, unlike the technique according to the related art, in the communication system that is divided into a plurality of communication apparatuses such as a first communication apparatus (e.g., indoor communication apparatus) and a second communication apparatus (e.g., outdoor communication apparatus), there is no need to provide a power supply line to transmit power of a power supply (e.g., solar cell) located inside or near the second communication apparatus (e.g., outdoor communication apparatus) to the first communication apparatus (e.g., indoor communication apparatus) in addition to the communication line, whereby the cost for the installment can be reduced. Further, the distance of the power transmission path to supply power to the second communication apparatus (e.g., outdoor communication apparatus) can be reduced, whereby the power transmission loss can be reduced. Further, since the operating power supply is selected according to the power state of each power supply, it is possible to continuously operate the first communication apparatus (e.g., indoor communication apparatus) and the second communication apparatus (e.g., outdoor communication apparatus) in an optimal power state for each power supply.

### Brief Description of Drawings

Fig. 1 is a conceptual diagram showing the outline of a system configuration of a communication system according to the present invention;
Fig. 2 is a system configuration diagram showing one example of the system configuration of the communication system according to the present invention;
Fig. 3 is a system configuration diagram showing a configuration different from that of Fig. 2 of the communication system according to the present invention;
Fig. 4 is a system configuration diagram showing a configuration different from the configurations of Figs. 2 and 3 of the communication system according to the present invention;
Fig. 5A is a block configuration diagram showing one example of internal configurations of an indoor communication apparatus and an outdoor communication apparatus that constitute the communication system shown in Fig. 2;
Fig. 5B is a block configuration diagram showing one example of internal configurations of the indoor communication apparatus and the outdoor communication apparatus that constitute the communication system shown in Fig. 2;
Fig. 6A is a block configuration diagram showing an example_different from those of Figs. 5A and 5B of the internal configurations of the indoor communication apparatus and the outdoor communication apparatus that constitute the communication system shown in Fig. 2;
Fig. 6B is a block configuration diagram showing an example different from those of Figs. 5A and 5B of the internal configurations of the indoor communication apparatus and the outdoor communication apparatus that constitute the communication system shown in Fig. 2; and
Fig. 7 is a system configuration diagram showing a configuration of a communication system according to a related art when both an indoor power supply and an outdoor power supply are used.

### Description of Embodiments

Hereinafter, with reference to the drawings, preferred exemplary embodiments of a communication system, a power supply control method, and a power supply control non-transitory computer readable medium according to the present invention will be described. In the following description, the communication system and the power supply control method according to the present invention will be described. Needless to say, the power supply control method may be executed as a power supply control non-transitory computer readable medium that can be executed by a computer or the power supply control non-transitory computer readable medium may be recorded in a recording medium that can be read out by a computer.

### (Features of the Present Invention)

Before describing exemplary embodiments of the present invention, the outline of the features of the present invention will be described first. The present invention relates to a mechanism for selecting a power supply that supplies power to each communication apparatus that constitutes a communication system. The communication system is composed of a plurality of communication apparatuses (e.g., an indoor communication apparatus (IDU: In Door Unit) and an outdoor communication apparatus (ODU: Out Door Unit). Each of the communication apparatuses is connected to a first power supply, which is a power supply included therein or an external power supply. Each of the communication apparatuses includes a power input mechanism that takes the power from the first power supply as an operating power supply, a power transmission mechanism that superimposes the power on a signal on a communication line that connects the communication apparatuses and transmits the power from the first power supply to a counterpart communication apparatus as a second power supply, and a power extraction mechanism that takes the power transmitted from the counterpart communication apparatus as the second power supply while being superimposed on the signal on the communication line as the operating power supply. Further, the communication line between the indoor communication apparatus (IDU) and the outdoor communication apparatus (ODU) includes a mechanism that enables bidirectional transmission of the power while being superimposed on a signal, and when the power supply is superimposed on the communication line which is provided between the indoor communication apparatus (IDU) and the outdoor communication apparatus (ODU), bidirectional power transmission from the indoor communication apparatus (IDU) to the outdoor communication apparatus (ODU) or from the outdoor communication apparatus (ODU) to the indoor communication apparatus (IDU).

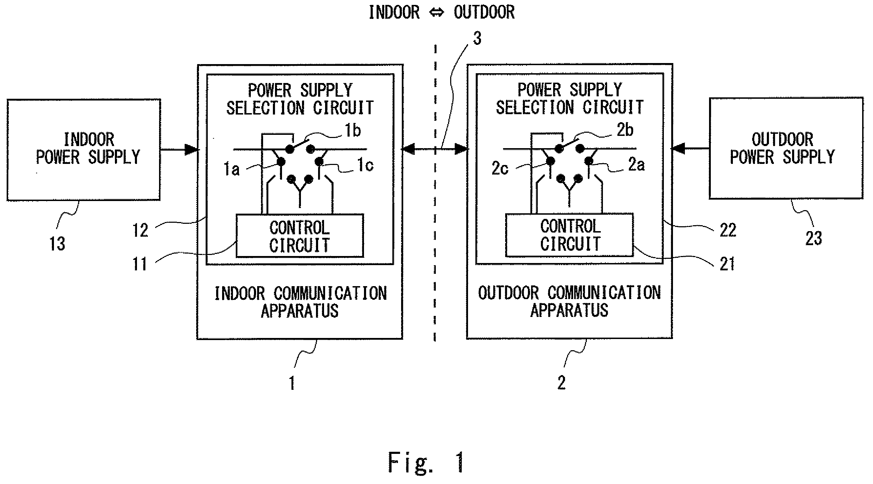

Fig. 1 is a conceptual diagram showing the outline of a system configuration of a communication system according to the present invention and shows an example having a configuration in which a power supply selection circuit including three mechanisms of the power input mechanism, the power transmission mechanism, and the power extraction mechanism that can be switchably controlled by a control circuit is included in both the indoor communication apparatus (IDU) and the outdoor communication apparatus (ODU) interconnected by the communication line. That is, an indoor communication apparatus 1 and an outdoor communication apparatus 2 that constitute the communication system are connected to each other by a communication line 3 that can bidirectionally transmit signals in such a way that power is superimposed on a signal and the indoor communication apparatus 1 and the outdoor communication apparatus 2 respectively include a power supply selection circuit 12 including three switches 1a, 1b, and 1c that can be opened and closed by a control circuit 11 and a power supply selection circuit 22 including three switches 2a, 2b, and 2c that can be opened and closed by a control circuit 21. Further, an indoor power supply 13 is connected to the indoor communication apparatus 1 and an outdoor power supply 23 is connected to the outdoor communication apparatus 2 as a first power supply to supply power to each communication apparatus and to transmit power to the counterpart communication apparatus.

In Fig. 1, the switch 1a of the power supply selection circuit 12 of the indoor communication apparatus 1 forms the power input mechanism to take in the power from the indoor power supply 13 (first power supply) as the operating power supply, the switch 1b forms the power transmission mechanism to superimpose the power from the indoor power supply 13 (first power supply) on the signal as the second power supply and transmit the power to the counterpart outdoor communication apparatus 2 via the communication line 3, and the switch 1c forms the power extraction mechanism to take in the power transmitted from the counterpart outdoor communication apparatus 2 via the communication line 3 as the second power supply while being superimposed on the signal as the operating power supply. Similarly, the switch 2a of the power supply selection circuit 22 of the outdoor communication apparatus 2 forms the power input mechanism to take in the power from the outdoor power supply 23 (first power supply) as the operating power supply, the switch 2b forms the power transmission mechanism to superimpose the power from the outdoor power supply 23 (first power supply) on the signal as the second power supply and transmit the power to the counterpart indoor communication apparatus 1 via the communication line 3, and the switch 2c forms the power extraction mechanism to take in the power transmitted from the counterpart indoor communication apparatus 1 via the communication line 3 as the second power supply while being superimposed on the signal as the operating power supply.

According to the configuration shown in Fig. 1, when the outdoor power supply 23 (e.g., wind power, solar cell) is used in the communication system having a configuration in which power is supplied while being superimposed on the communication line 3 from the indoor communication apparatus 1 to the outdoor communication apparatus 2 and the outdoor power supply 23 is installed near the outdoor communication apparatus 2, the power from the outdoor power supply 23 can be transmitted while being superimposed on the signal on the communication line 3 from the outdoor communication apparatus 2 to the indoor communication apparatus 1 without providing the power supply line to draw the power from the outdoor power supply 23 to the indoor communication apparatus 1 in addition to the communication line 3, whereby the cost for the installment can be reduced. When the outdoor power supply 23 is installed near the outdoor communication apparatus 2, the outdoor communication apparatus 2 is directly connected the outdoor power supply 23, whereby the indoor communication apparatus 1 needs not transmit the power transmitted via the power supply line to the outdoor communication apparatus 2 via the communication line 3 and the power transmission distance can be reduced. It is therefore possible to reduce the power transmission loss as well.

In summary, the present invention employs the following techniques in order to solve the problems according to the related art.
(1) For example, when an outdoor power supply such as photovoltaic power generation is used and the power input mechanism to take in the power from the power supply is provided only in the indoor communication apparatus (IDU), not in the outdoor communication apparatus (ODU), as in the related art, even when the outdoor power supply is located near the outdoor communication apparatus (ODU), the construction to install a power supply line from the outdoor power supply located near the outdoor communication apparatus (ODU) to the indoor communication apparatus (IDU) is needed, which requires the cost for the installment. Further, a power transmission loss that the power is transmitted to the outdoor communication apparatus (ODU) from the indoor communication apparatus (IDU) via the communication line occurs.
   Meanwhile, in the present invention, the power input mechanism to take in the power from the power supply is included also in the outdoor communication apparatus (ODU), which eliminates the need to install the power supply line from the outdoor power supply to the indoor communication apparatus (IDU) and allows the outdoor communication apparatus (ODU) to operate using the power that has been directly taken from the outdoor power supply.
(2)Now, when the installment of the power supply line from the outdoor power supply to the indoor communication apparatus (IDU) is omitted and the power is supplied only to the outdoor communication apparatus (ODU) from the outdoor power supply as in (1), if the power feeding to the indoor communication apparatus (IDU) from the indoor power supply stops for any reason, even when the outdoor power supply generates a sufficient amount of power, the power feeding operation to the indoor communication apparatus (IDU) completely stops, which stops the operation as the indoor communication apparatus (IDU).
   Therefore, in the present invention, the outdoor communication apparatus (ODU) includes the power transmission mechanism that allows power to be superimposed on a signal on the communication line to the indoor communication apparatus (IDU) and both the power transmission from the indoor communication apparatus (IDU) to the outdoor communication apparatus (ODU) and the power transmission from the outdoor communication apparatus (ODU) to the indoor communication apparatus (IDU) can be performed on the communication line that connects the indoor communication apparatus (IDU) and the outdoor communication apparatus (ODU), whereby the bidirectional power transmission operation can be performed. Further, the indoor communication apparatus (IDU) includes the power extraction mechanism that takes the power that has been transmitted while being superimposed on the signal via the communication line as the operating power supply. Accordingly, even when the power feeding from the indoor power supply stops, the power to be supplied to the indoor communication apparatus (IDU) is switched to the power from the communication line and the operation of the indoor communication apparatus (IDU) can be continued.
(3) In the case of the Power over Ethernet (PoE) defined in the IEEE802.3 standard as a technique for superimposing the power on the communication line, as described above, after the power supply is turned on, the voltage of the power superimposed on the communication line is gradually increased to check whether it is possible to perform power feeding to the communication line. When only such a gradual voltage increase operation is implemented, even when both the indoor communication apparatus (IDU) and the outdoor communication apparatus (ODU) connected to the communication line include the power supply function by the PoE technique, if the power supply from the power source (e.g., outdoor power supply via the power input mechanism of the outdoor communication apparatus (ODU)) via the power input mechanism of one of the communication apparatuses is interrupted, even when one communication apparatus desires to be supplied with power from the counterpart communication apparatus (e.g., the indoor power supply via the power input mechanism of the indoor communication apparatus (IDU)) via the communication line, the amount of power may not reach the power level necessary for the operation of the communication apparatus and the operation of the communication apparatus may be stopped.

Accordingly, the present invention performs control to constantly monitor the voltage level of the power supply and select the power supply from which power should be taken based on the result of the monitoring, whereby it is possible to appropriately deal with variations and interruption of the power supply output and achieve the continuous operation as the communication system.

By employing the above configuration, as described above, there is no need to install the power supply line to transmit power from the outdoor power supply to the indoor communication apparatus (IDU), whereby the cost for the installment can be reduced. Furthermore, it is possible to reduce the power transmission path to supply power to the outdoor communication apparatus (ODU), whereby the power transmission loss can be reduced. Furthermore, the operation of the communication system can be continued more reliably.

Note that the present invention is not limited to the communication system composed of the indoor communication apparatus and the outdoor communication apparatus and may be a communication system including a first communication apparatus and a second communication apparatus that are divided into arbitrary two functions regardless of indoors and outdoors. For example, the communication system divided into the two functions of the first communication apparatus and the second communication apparatus may be a communication system including a first power supply and a second power supply. The first power supply may be a power supply included in each of the first communication apparatus and the second communication system or an external power supply located nearby to which the first communication apparatus and the second communication system are connected to supply power to each of the first communication apparatus and the second communication apparatus. The second power supply is able to transmit the power from the first power supply to the counterpart communication apparatus bidirectionally in such a way that the power is superimposed on the signal on a communication line that connects the first communication apparatus and the second communication apparatus. The communication system is further able to select from which one of the first power supply and the second power supply the power should be taken according to the result of monitoring the power supply state in each of the first communication apparatus and the second communication apparatus.

Furthermore, the present invention may be a communication system composed of a plurality of (arbitrary number of) communication apparatuses, not only two communication apparatuses, as in a case in which a communication network composed of a plurality of network devices are formed. That is, the present invention may be suitably applied to a communication system in which, in an environment in which a plurality of power supplies are dispersed, each communication apparatus that constitute the network device includes a power supply or the communication apparatuses are connected to the respective power supplies arranged nearby and the communication system is able to bidirectionally transmit power in such a way that the power is superimposed on a signal to a communication line that forms the communication network.

### (Configuration Example of Exemplary Embodiments)

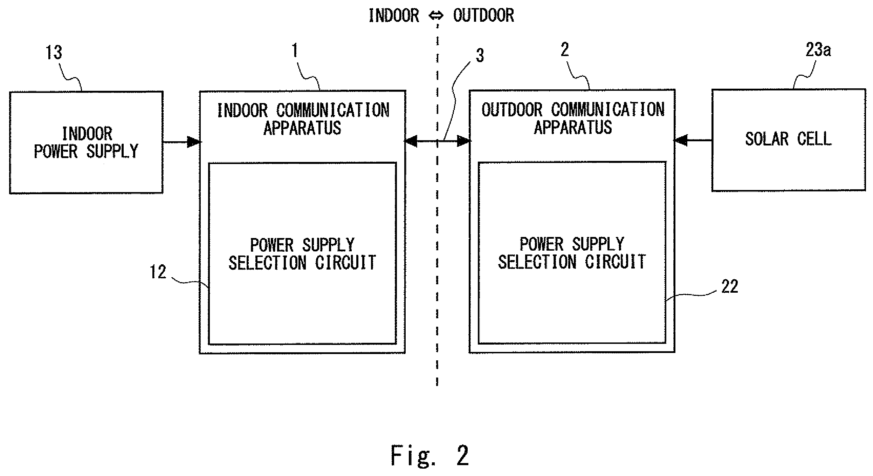

Next, with reference to the drawings, one example of the system configuration of the communication system according to the present invention will be described in detail. First, a system configuration of a communication system shown in Fig. 2 will be described. Fig. 2 is a system configuration diagram showing one example of the system configuration of the communication system according to the present invention and shows a case in which the outdoor power supply 23 shown in the conceptual diagram in Fig. 1 is constituted using a solar cell.

A bidirectional communication line 3 capable of transmitting power in such a way that the power is superimposed on a signal is connected between an indoor communication apparatus 1 and an outdoor communication apparatus 2 that constitute the communication system shown in Fig. 2, as shown in the conceptual diagram shown in Fig. 1. Further, an indoor power supply 13 connected to the indoor communication apparatus 1 is included indoors, and a solar cell 23a is included outdoors as the outdoor power supply 23 connected to the outdoor communication apparatus 2 as a first power supply used to supply power to each communication apparatus and transmit power to the counterpart communication apparatus.

Further, the indoor communication apparatus 1 and the outdoor communication apparatus 2 have the internal configurations similar to those of the conceptual diagram shown in Fig. 1. The indoor communication apparatus 1 and the outdoor communication apparatus 2 respectively include a power supply selection circuit 12 and a power supply selection circuit 22, and each of the power supply selection circuit 12 and the power supply selection circuit 22 includes three switches that can switchably control the power supply route according to the power supply state.

That is, the indoor communication apparatus 1 and the outdoor communication apparatus 2 are able to select, by the power supply selection circuit 12 and the power supply selection circuit 22, whether to receive power from the neighboring first power supply (the indoor power supply 13 in the indoor communication apparatus 1 and the solar cell 23a in the outdoor communication apparatus 2) by the power input mechanism as the operating power supply, whether to receive power transmitted from the counterpart communication apparatus via the communication line 3 as the second power supply (power of the solar cell 23a transmitted from the outdoor communication apparatus 2 in the case of the indoor communication apparatus 1 and power of the indoor power supply 13 transmitted from the indoor communication apparatus 1 in the case of the outdoor communication apparatus 2) by the power extraction mechanism as the operating power supply, or whether to transmit the power to be transmitted to the counterpart communication apparatus (i.e., power from the first power supply, that is, power from the indoor power supply 13 in the indoor communication apparatus 1 and power from the solar cell 23a in the outdoor communication apparatus 2) to the communication line 3 by the power transmission mechanism as the second power supply. The selection operations in the power supply selection circuit 12 and the power supply selection circuit 22 according to the power supply state are controlled in each communication apparatus autonomously or according to a control signal or a communication state from the counterpart communication apparatus.

The communication system shown in Fig. 2 shows a configuration example in which cables are used as the communication line 3 between the indoor communication apparatus 1 and the outdoor communication apparatus 2 and to connect the indoor communication apparatus 1 and a signal source and the outdoor communication apparatus 2 modulates a signal received from the indoor communication apparatus 1 to output the modulated signal to the radio space as a radio signal and sends a signal obtained by demodulating the radio signal received from the radio space to the indoor communication apparatus 1 via the communication line 3 which is a cable. That is, the communication system shown in Fig. 2 transmits and receives signals by the signal path of the signal source→(wired)→ {indoor communication apparatus 1 →communication line 3 (wired)→outdoor communication apparatus 2}→(wireless) →{outdoor communication apparatus 2→communication line 3(wired) →indoor communication apparatus 1}→(wired) →signal source.

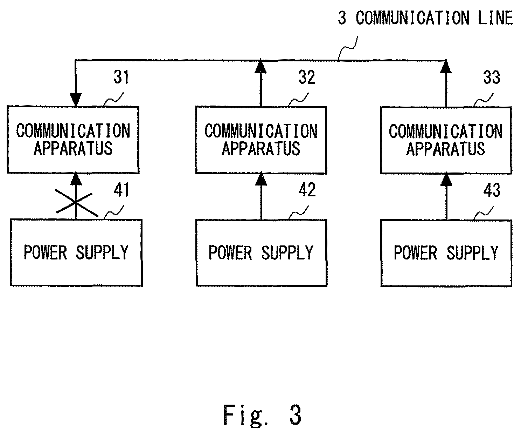

Next, Fig. 3 shows a configuration example of the communication system different from that of Fig. 2. Fig. 3 is a system configuration diagram showing a configuration different from that of Fig. 2 of the communication system according to the present invention and shows a system configuration example when three or more plurality of communication apparatuses are connected to one communication line. The communication system shown in Fig. 3 shows a configuration example in which three communication apparatuses 31, 32, and 33 are connected to one communication line 3 and a power supply 41, a power supply 42, and a power supply 43 are respectively connected to the communication apparatus 31, the communication apparatus 32, and the communication apparatus 33.

As shown in Fig. 3, in a normal state, when the plurality of communication apparatuses 31, 32, and 33 are connected to one communication line 3, power can be transmitted to the communication line 3 from a specific communication apparatus (e.g., the communication apparatus 31) that is predetermined as a default power transmission apparatus among the communication apparatus 31, the communication apparatus 32, and the communication apparatus 33 and the power can be supplied to other communication apparatuses (e.g., the communication apparatus 32 and the communication apparatus 33) as the operating power supply. As shown in × in Fig. 3, when the power supply from the power supply 41 is interrupted for any reason and the default power transmission apparatus (e.g., the communication apparatus 31) stops the power transmission operation via the communication line 3, an operation for transmitting power to the communication line 3 from any one of the other communication apparatuses (e.g., the communication apparatus 32 or the communication apparatus 33) in a predetermined order is started and the default power transmission apparatus in which the power transmission operation has been stopped (e.g., the communication apparatus 31) is switched to perform the operation for receiving the power from the communication line 3.

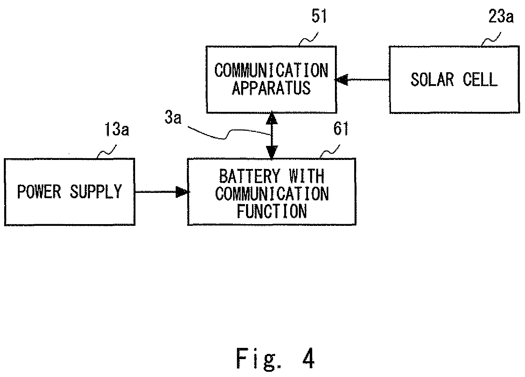

Next, Fig. 4 shows a configuration example of a communication system different from the configuration examples of Figs. 2 and 3. Fig. 4 shows a system configuration diagram showing a configuration different from the configurations of Figs. 2 and 3 of the communication system according to the present invention. Fig. 4 shows a system configuration example in which the indoor communication apparatus 1 and the outdoor communication apparatus 2 shown in Fig. 2 are integrated as one communication apparatus and this communication apparatus and a battery with a communication function are combined. The communication system shown in Fig. 4 shows a configuration example in which a communication apparatus 51 in which the indoor communication apparatus 1 and the outdoor communication apparatus 2 shown in Fig. 2 are integrated with each other is connected to a solar cell 23a, which is one example of the outdoor power supply 23 and to the battery with a communication function 61 via a communication line 3a and a power supply 13a which is similar to the indoor power supply 13 is connected to the battery with the communication function 61. The battery with the communication function 61 has a function of communicating a control signal, a failure, the remaining capacity of the power supply 13a and the like with the communication apparatus 51 via the communication line 3a. That is, the battery with the communication function 61 corresponds to the indoor communication apparatus 1 shown in Fig. 2 and the communication apparatus 51 corresponds to the outdoor communication apparatus 2 shown in Fig. 2.

Further, the communication system shown in Fig. 4 shows the configuration example in which cables are used as the communication line 3a between the battery with the communication function 61 and the communication apparatus 51 and to connect the communication apparatus 51 and a signal source, and the communication apparatus 51 performs signal processing of the signal received from the signal source, then modulates the signal and outputs the modulated signal to the radio space as a radio signal, performs signal processing of the signal obtained by demodulating the radio signal received from the radio space, and sends the signal to the signal source via the cable. That is, the communication system shown in Fig. 4 transmits and receives signals by the signal path of the signal source→(wired)→{communication apparatus 51}→(wireless) →{communication apparatus 51}→(wired)→signal source.

### (Description of Operations of Exemplary Embodiments)

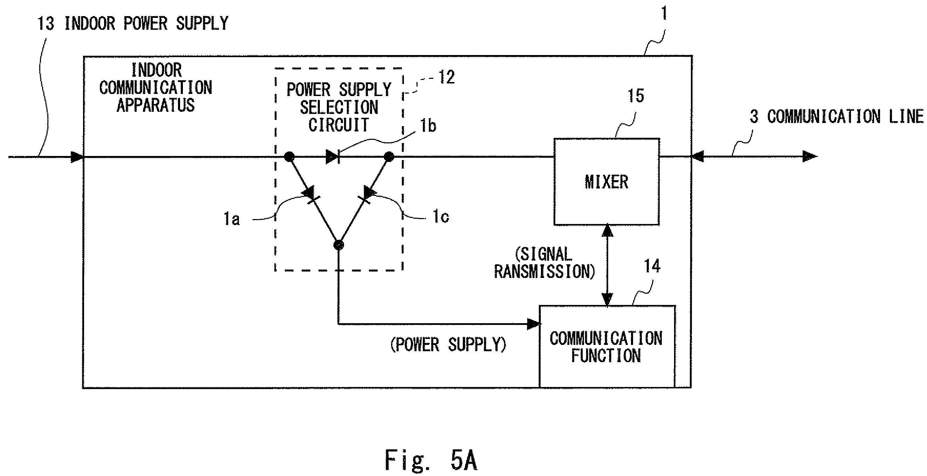

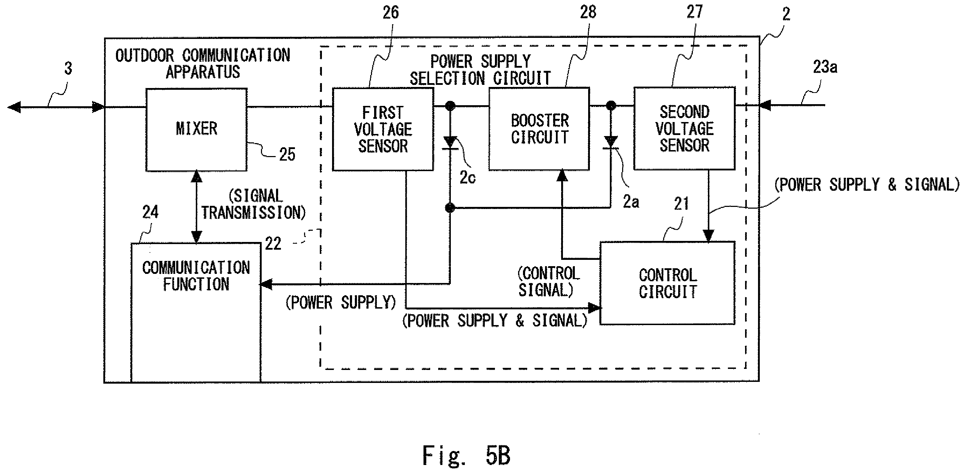

Next, one example of the operation of the communication system according to the present invention will be described in detail as one example of the power supply control method according to the present invention taking a configuration example of the communication system shown in Fig. 2 as an example. In the communication system shown in Fig. 2, the indoor power supply 13 is able to constantly supply power unless power failure or the like of a commercial power supply occurs. On the other hand, the solar cell 23a, which is one example of the outdoor power supply, is a power supply in which the power supply state can be unstable according to the sunshine condition. An operation of a case in which the power supply state needs to be controlled according to the power generation amount in the solar cell 23a will be described first. Figs. 5A and 5B show examples of the internal configurations of the indoor communication apparatus 1 and the outdoor communication apparatus 2, respectively, to implement the power supply control method in such a case.

Figs. 5A and 5B each show a block configuration diagram showing one example of the internal configurations of the indoor communication apparatus 1 and the outdoor communication apparatus 2 that constitute the communication system shown in Fig. 2 and show one example of the internal configurations of the indoor communication apparatus 1 and the outdoor communication apparatus 2 when the power supply route to the indoor communication apparatus 1 and the outdoor communication apparatus 2 is controlled according to the power generation amount in the solar cell 23a, which is one example of the outdoor power supply 23. Fig.5A shows an example of the internal configuration of the indoor communication apparatus 1 and Fig. 5B shows an example of the internal configuration of the outdoor communication apparatus 2.

As shown in Fig. 5A, the indoor communication apparatus 1 at least includes a power supply selection circuit 12 that selects which one of the power from the indoor power supply 13, which is the first power supply, of the indoor communication apparatus 1 and the power transmitted via the communication line 3 as the second power supply should be taken as the power supply to operate a communication function 14, a mixer 15 and the like and selects the power supply route to determine whether to overlap the power from the indoor power supply 13 with the signal on the communication line 3 to transmit the power to the counterpart outdoor communication apparatus 2 as the counterpart second power supply, and a communication function 14 that generates a signal to be transmitted to the communication line 3 and processes a signal received via the communication line 3, and a mixer 15 that superimposes the power from the power supply selection circuit 12 on a transmission signal from the communication function 14, separates the power from the signal received via the communication line 3, and outputs the signal and the power to the communication function 14 and the power supply selection circuit 12, respectively. The three diode symbols in the power supply selection circuit 12 indicate the switches (the switches 1a, 1b, and 1c shown in Fig. 2) that are autonomously switched according to the voltage level of each of the power from the indoor power supply 13 and the power transmitted via the communication line 3.

Further, as shown in Fig. 5B, the outdoor communication apparatus 2 at least includes a power supply selection circuit 22 that selects which one of the power from the first power supply of the outdoor communication apparatus 2, which is the solar cell 23a, one example of the outdoor power supply 23, and the power transmitted via the communication line 3 as the second power supply should be taken as the power supply to operate a communication function 24, a mixer 25 and the like and selects the power supply route to determine whether to overlap the power from the solar cell 23a with the signal on the communication line 3 to transmit the power to the counterpart indoor communication apparatus as the counterpart second power supply, a communication function 24 that generates a signal to be transmitted to the communication line 3 and processes a signal received via the communication line 3, and a mixer 25 that superimposes the power from the power supply selection circuit 22 on a transmission signal from the communication function 24, separates the power from the signal received via the communication line 3, and outputs the signal and the power to the communication function 24 and the power supply selection circuit 22, respectively.

Further, the power supply selection circuit 22 shown in Fig. 5B at least includes, besides a control circuit 21 that controls the power supply route, a first voltage sensor 26 that detects the voltage level of the power transmitted from the counterpart indoor communication apparatus 1 via the communication line 3 as the second power supply, a second voltage sensor 27 that detects the voltage level of the power from the solar cell 23a, which is the first power supply of the outdoor communication apparatus, and a booster circuit 28 to boost the voltage level of the power from the solar cell 23a when the power from the solar cell 23a is transmitted to the counterpart indoor communication apparatus 1 via the communication line 3.

The control circuit 21 operates by the power directly output from the first voltage sensor 26 or the second voltage sensor 27, controls the power supply route based on the result of monitoring the reception signal and the power output from the first voltage sensor 26 and the second voltage sensor 27 as the power to be supplied, generates a control signal to control the operation of the booster circuit 28, and outputs the control signal. The two diode symbols in the power supply selection circuit 22 indicate the switches (corresponding to the switches 2a and 2c shown in Fig. 2) that switch according to the voltage level of each of the power from the solar cell 23a and the power transmitted via the communication line 3.

As one example, the control of the power supply route in the indoor communication apparatus 1 and the outdoor communication apparatus 2 shown in Figs. 5A and 5B is executed as follows.
(1) When the second voltage sensor 27 detects that the power generation amount in the solar cell 23a is so small that it is impossible to supply the amount of power necessary for the operation of only the outdoor communication apparatus 2,
   the indoor communication apparatus 1 performs control by the power supply selection circuit 12 to select the power from the indoor power supply 13 as the operating power supply and operate by the selected power and transmit the power from the indoor power supply 13 to the mixer 15 and the communication line 3 since the voltage level of the power superimposed on the signal from the communication line 3 has not increased. On the other hand, the outdoor communication apparatus 2 performs control, based on the control from the control circuit 21, by the power supply selection circuit 22, to select the power transmitted from the indoor communication apparatus 1 via the communication line 3 as the operating power supply and operate by the selected power.
   That is, the communication function 24 and the mixer 25 in the outdoor communication apparatus 2 operate by the power output from the first voltage sensor 26 via the power supply selection circuit 22. The control circuit 21 in the outdoor communication apparatus 2 operates by the power directly output from the first voltage sensor 26. Further, since it is impossible to transmit the power from the solar cell 23a to the counterpart indoor communication apparatus 1 via the communication line 3, by the control from the control circuit 21, the booster circuit 28 of the power supply selection circuit 22 in the outdoor communication apparatus 2 does not perform the operation for boosting the power from the solar cell 23a.
(2) When the second voltage sensor 27 has detected that the power generation amount in the solar cell 23a has been increased to the level where only the outdoor communication apparatus 2 can be operated from the level where even only the outdoor communication apparatus 2 cannot be operated,
   the outdoor communication apparatus 2 performs control, based on the control from the control circuit 21, to switch the state in which the power transmitted from the indoor communication apparatus 1 via the communication line 3 is selected to the state in which the power from the solar cell 23a is selected as the operating power supply by the power supply selection circuit 22.
   That is, the communication function 24 and the mixer 25 in the outdoor communication apparatus 2 are operated by the power output from the second voltage sensor 27 via the power supply selection circuit 22. The control circuit 21 in the outdoor communication apparatus 2 operates by the power directly output from the second voltage sensor 27. Further, the booster circuit 28 of the power supply selection circuit 22 in the outdoor communication apparatus 2 keeps the state in which the operation for boosting the power from the solar cell 23a is not performed. As a result, the indoor communication apparatus 1 keeps the state of selecting the power from the indoor power supply 13 as the operating power supply and operates by the selected power.
(3) When the second voltage sensor 27 has detected that the power generation amount in the solar cell 23a has been increased to the level where the outdoor communication apparatus 2 and the indoor communication apparatus 1 can be concurrently performed,
   the outdoor communication apparatus 2 performs an operation for boosting the power from the solar cell 23a by the booster circuit 28 in the power supply selection circuit 22 based on the control from the control circuit 21, superimposing the power on the signal in the mixer 25, and transmitting the power to the counterpart indoor communication apparatus 1 via the communication line 3. When it is detected that the voltage level of the power superimposed on the signal via the communication line 3 has been increasing, the power supply selection circuit 12 of the indoor communication apparatus 1 performs control to switch the state in which the power from the indoor power supply 13 is selected to a state in which the power from the communication line 3 is selected as the operating power supply.
   That is, the communication function 14 and the mixer 15 in the indoor communication apparatus 1 are switched to the state in which they are operated by the power from the communication line 3. The outdoor communication apparatus 2 keeps the state in which it selects the power from the solar cell 23a as the operating power supply and operates by the selected power.
(4) After that, when the second voltage sensor 27 has detected that the power generation amount in the solar cell 23a has been decreased from the level where the outdoor communication apparatus 2 and the indoor communication apparatus 1 can be concurrently operated to the level where only the outdoor communication apparatus 2 can be operated,
   the outdoor communication apparatus 2 stops, based on the control from the control circuit 21, the operation for boosting the booster circuit 28 in the power supply selection circuit 22 and the operation for transmitting the power from the solar cell 23a to the mixer 25 and the communication line 3. When it is detected that the voltage level of the power superimposed on the signal via the communication line 3 has been decreased, the power supply selection circuit 12 of the indoor communication apparatus 1 performs control to autonomously switch the state in which the power from the communication line 3 is selected to the state in which the power from the indoor power supply 13 is selected as the operating power supply.
   That is, the communication function 14 and the mixer 15 in the indoor communication apparatus 1 are switched to the state in which they are operated by the power from the indoor power supply 13. Note that the outdoor communication apparatus 2 keeps the state in which the power from the solar cell 23a is selected as the operating power supply and the outdoor communication apparatus 2 operates by the selected power.
(5) After that, when the second voltage sensor 27 has detected that the power generation amount in the solar cell 23a has been decreased from the level where only the outdoor communication apparatus 2 can be operated to the level where even the operation of only the outdoor communication apparatus 2 is no longer possible,
   the outdoor communication apparatus 2 performs control to switch, by the power supply selection circuit 22, the state in which the power from the solar cell 23a is selected to a state in which the power transmitted from the indoor communication apparatus 1 via the communication line 3 is selected as the operating power supply based on the control from the control circuit 21.

In summary, the communication function 24 and the mixer 25 in the outdoor communication apparatus 2 operates by the power output from the first voltage sensor 26 via the power supply selection circuit 22. The control circuit 21 in the outdoor communication apparatus 2 operates by the power directly output from the first voltage sensor 26. On the other hand, the indoor communication apparatus 1 keeps the state in which it selects the power from the indoor power supply 13 as the operating power supply and operates by the selected power.

As described above, based on the result of monitoring the power from the solar cell 23a, the indoor communication apparatus 1 and the outdoor communication apparatus 2 are able to appropriately select one of the indoor power supply 13 and the solar cell 23a as the operating power supply for the continuous operations of the indoor communication apparatus 1 and the outdoor communication apparatus 2.

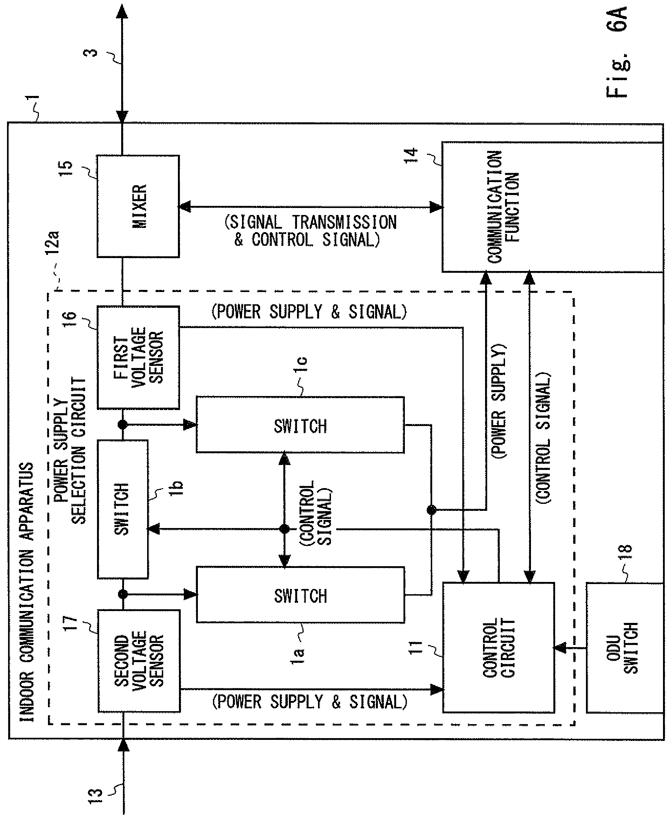

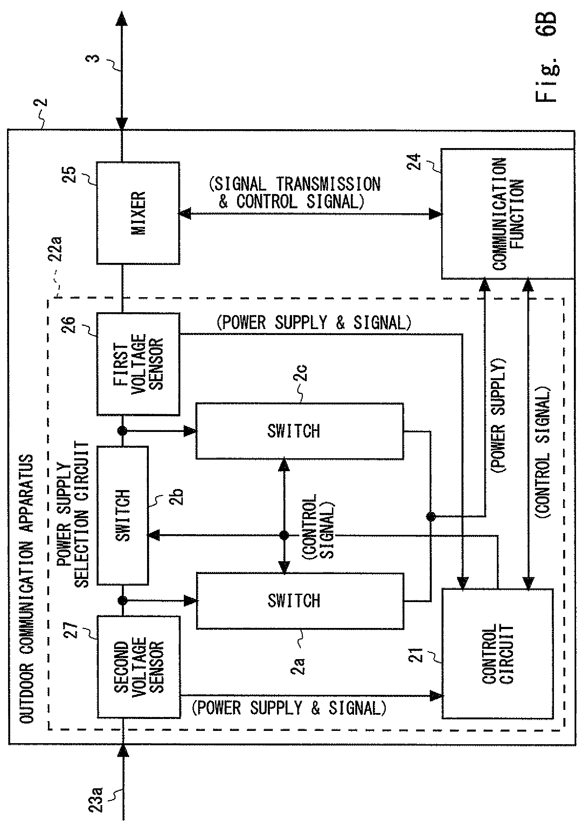

Next, with reference to Figs. 6A and 6B, an example different from that of Figs. 5A and 5B showing the operations of the communication system according to the present invention will be described in detail as another example of the power supply control method according to the present invention taking the configuration example of the communication system shown in Fig. 2 as an example.

Figs. 6A and 6B are block configuration diagrams showing examples different from those of Figs. 5A and 5B showing the internal configurations of the indoor communication apparatus 1 and the outdoor communication apparatus 2 that constitute the communication system shown in Fig. 2 and each show an internal configuration example when a power supply route is selected by the collaboration of the indoor communication apparatus 1 and the outdoor communication apparatus 2. That is, while the control circuit 21 in one communication apparatus (i.e., the outdoor communication apparatus 2) executes the control regarding the power supply route of the indoor communication apparatus 1 and the outdoor communication apparatus 2 in the operation examples of the indoor communication apparatus 1 and the outdoor communication apparatus 2 shown in Figs. 5A and 5B, the examples shown in Figs. 6A and 6B show internal configuration examples when the control regarding the power supply route of the indoor communication apparatus 1 and the outdoor communication apparatus 2 is executed by the collaboration of the indoor communication apparatus 1 and the outdoor communication apparatus 2. Further, Figs. 6A and 6B also show one example of the internal configuration when a temporary stop and a re-start (cancel of the stop) of the operation of the communication function in the outdoor communication apparatus 2 output as a radio signal are allowed by the operation of the communication system by the operator according to the state of the power to be supplied in terms of safety and operability. Fig. 6A shows one example of the internal configuration of the indoor communication apparatus 1 and Fig. 6B shows one example of the internal configuration of the outdoor communication apparatus 2.

As shown in Fig. 6A, the indoor communication apparatus 1 at least includes a power supply selection circuit 12a that selects which one of the power from the indoor power supply 13, which is the first power supply, of the indoor communication apparatus 1 and the power transmitted via the communication line 3 as the second power supply should be taken as the power supply to operate a communication function 14, a mixer 15 and the like and selects the power supply route to determine whether to overlap the power from the indoor power supply 13 with the signal on the communication line 3 to transmit the power to the counterpart outdoor communication apparatus 2 as the counterpart second power supply, and a communication function 14 that generates a signal to be transmitted to the communication line 3 and processes a signal received via the communication line 3, a mixer 15 that superimposes the power from the power supply selection circuit 12a on a transmission signal from the communication function 14, separates the power from the signal received via the communication line 3, and outputs the signal and the power to the communication function 14 and the power supply selection circuit 12a, respectively, and an ODU switch 18 to generate a control signal to the outdoor communication apparatus 2.

Further, the power supply selection circuit 12a shown in Fig. 6A at least includes, besides the control circuit 11 that controls the power supply route, a first voltage sensor 16 that detects the voltage level of the power transmitted from the counterpart indoor communication apparatus 1 via the communication line 3 as the second power supply, a second voltage sensor 17 that detects the voltage level of the power from the indoor power supply 13, which is the first power supply of the indoor communication apparatus, and three switches 1a, 1b, and 1c that open and close the power supply route based on the control from the control circuit 11.

The switch 1a forms the power input mechanism to take in the power from the indoor power supply 13 as the operating power supply and supply the power to the communication function 14, the mixer 15, and the ODU switch 18, the switch 1b forms the power transmission mechanism to superimpose the power from the indoor power supply 13 on the signal and transmit the power to the counterpart outdoor communication apparatus 2 via the communication line 3, and the switch 1c forms the power extraction mechanism to take in the power transmitted from the counterpart outdoor communication apparatus 2 via the communication line 3 while being superimposed on the signal as the operating power supply and supply the power to the communication function 14, the mixer 15, and the ODU switch 18.

The control circuit 11 operates by the power directly output from the first voltage sensor 16 or the second voltage sensor 17, controls the power supply route based on the power and the reception signal output from the first voltage sensor 16 and the second voltage sensor 17 to supply power, and generates and outputs a control signal to control the operation of the communication function 14. The ODU switch 18 generates, when pressed by an operator, a control signal to instruct the control circuit 11 to stop the operation of the communication function 24 of the counterpart outdoor communication apparatus 2 or to cancel the stop of the operation of the communication function 24 and requests the control circuit 11 to send the control signal to the counterpart outdoor communication apparatus 2 via the communication line 3.

Further, as shown in Fig. 6B, the outdoor communication apparatus 2 has an internal configuration substantially the same as that of the indoor communication apparatus 1 shown in Fig. 6A, and at least includes a power supply selection circuit 22a that selects which one of the power from the first power supply of the outdoor communication apparatus 2, which is the solar cell 23a, one example of the outdoor power supply 23 and the power transmitted via the communication line 3 as the second power supply should be taken as the power supply to operate a communication function 24, a mixer 25 and the like and selects the power supply route to determine whether to overlap the power from the solar cell 23a with the signal on the communication line 3 to transmit the power to the counterpart indoor communication apparatus 1 as the counterpart second power supply, a communication function 24 that generates a signal to be transmitted to the communication line 3 and processes a signal received via the communication line 3, and a mixer 25 that superimposes the power from the power supply selection circuit 22a on a transmission signal from the communication function 24, separates the power from the signal received via the communication line 3, and outputs the signal and the power to the communication function 24 and the power supply selection circuit 22a, respectively.

Further, the power supply selection circuit 22a shown in Fig. 6B at least includes, besides the control circuit 21 that controls the power supply route, a first voltage sensor 26 that detects the voltage level of the power transmitted from the counterpart indoor communication apparatus 1 via the communication line 3 as the second power supply, a second voltage sensor 27 that detects the voltage level of the power from the first power supply of the outdoor communication apparatus 2, which is the solar cell 23a, one example of the outdoor power supply 23, and three switches 2a, 2b, and 2c that open or close the power supply route based on the control from the control circuit 21.

The switch 2a forms the power input mechanism to take in the power from the solar cell 23a as the operating power supply and supply the power to the communication function 24 and the mixer 25, the switch 2b forms the power transmission mechanism to superimpose the power from the solar cell 23a on the signal and transmit the power to the counterpart indoor communication apparatus 1 via the communication line 3, and the switch 2c forms the power extraction mechanism to take in the power transmitted from the counterpart indoor communication apparatus 1 via the communication line 3 while being superimposed on the signal as the operating power supply and supply the power to the communication function 24 and the mixer 25.

The control circuit 21 operates by the power directly output from the first voltage sensor 26 or the second voltage sensor 27, controls the power supply route based on the reception signal and the power output from the first voltage sensor 26 and the second voltage sensor 27 as the power to be supplied, generates a control signal to control the operation of the communication function 24, and outputs the control signal.

The control regarding the power supply route in the indoor communication apparatus 1 and the outdoor communication apparatus 2 shown in Figs. 6A and 6B is executed as follows as one example.
(1) When the second voltage sensor 27 has detected that the power generation amount in the solar cell 23a is so small that it is impossible to supply the amount of power necessary for the operation of only the outdoor communication apparatus 2,
   the outdoor communication apparatus 2 performs control, based on the control from the control circuit 21, to open the switches 2a and 2b, close the switch 2c, select the power transmitted from the indoor communication apparatus 1 via the communication line 3 as the operating power supply for the operation of the outdoor communication apparatus 2 by the power supply selection circuit 22a.
   That is, the communication function 24 and the mixer 25 in the outdoor communication apparatus 2 operate by the power output from the first voltage sensor 26 via the power supply selection circuit 22a. The control circuit 21 in the outdoor communication apparatus 2 operates by the power directly output from the first voltage sensor 26.
   On the other hand, the indoor communication apparatus 1 detects, as the detection results in the first voltage sensor 16 and the second voltage sensor 17, that the voltage level of the power superimposed on the signal from the communication line 3 has not decreased and the power output from the indoor power supply 13 is in the normal state. Therefore, the indoor communication apparatus 1 performs control, based on the control from the control circuit 21, to open the switches 1c and 1b, close the switch 1a, and select the power from the indoor power supply 13 as the operating power supply for the operation of the indoor communication apparatus 1 by the power supply selection circuit 12a.
   That is, the communication function 14, the mixer 15, and the ODU switch 18 in the indoor communication apparatus 1 operate by the power output from the second voltage sensor 17 via the power supply selection circuit 12a. The control circuit 11 in the indoor communication apparatus 1 operates by the power directly output from the second voltage sensor 17.
(2) When the second voltage sensor 27 has detected that the power generation amount in the solar cell 23a has been increased to the level where only the outdoor communication apparatus 2 can be operated from the level where even only the outdoor communication apparatus 2 cannot be operated,
   the outdoor communication apparatus 2 performs control, based on the control from the control circuit 21, to open the switch 2c, close the switch 2a, and switch the state in which the power transmitted from the indoor communication apparatus 1 via the communication line 3 is selected to the state in which the power from the solar cell 23a is selected as the operating power supply by the power supply selection circuit 22a. The switch 2b is kept to be opened.
   That is, the communication function 24 and the mixer 25 in the outdoor communication apparatus 2 are in the state in which they are operated by the power output from the first voltage sensor 26 via the power supply selection circuit 22a. The control circuit 21 in the outdoor communication apparatus 2 is in the state in which it is operated by the power directly output from the first voltage sensor 26. On the other hand, since there is no change in the detection results in the first voltage sensor 16 and the second voltage sensor 17, the indoor communication apparatus 1 keeps the state in which it selects the power from the indoor power supply 13 for the operation of the indoor communication apparatus 1.
(3) When the second voltage sensor 27 detects that the power generation amount in the solar cell 23a has been increased to the level where the outdoor communication apparatus 2 and the indoor communication apparatus 1 can be concurrently operated,
   the control circuit 21 of the outdoor communication apparatus 2 first outputs to the communication function 24 a control signal to instruct the communication function 24 to generate a notification signal to send a notification indicating that the power generation amount in the solar cell 23a has been increased to the level where both the outdoor communication apparatus 2 and the indoor communication apparatus 1 can be concurrently operated. The communication function 24 that has received the control signal generates the notification signal instructed by the control circuit 21 and sends the notification signal to the counterpart indoor communication apparatus 1 via the mixer 25 and the communication line 3.
   The communication function 14 of the indoor communication apparatus 1 that has received the notification signal from the outdoor communication apparatus 2 via the communication line 3 and the mixer 15 transfers the notification signal to the control circuit 11. The control circuit 11 checks whether it is ready to switch the power supply from the indoor power supply 13 that has supplied power to the power from the communication line 3. When it is confirmed that the power supply can be switched without any problem, the control circuit 11 outputs to the communication function 14 a control signal to instruct the communication function 14 to generate a response signal to request transmission of the power from the solar cell 23a to the indoor communication apparatus 1 via the communication line 3 in such a way that the power is superimposed on the signal. The communication function 14 that has received the control signal generates the response signal indicated by the control circuit 11 and sends back the response signal to the counterpart outdoor communication apparatus 2 via the mixer 15 and the communication line 3.
   The communication function 24 of the outdoor communication apparatus 2 that has received the response signal sent from the indoor communication apparatus 1 via the communication line 3 and the mixer 25 transfers the response signal to the control circuit 21. The control circuit 21 that has received the response signal causes the state of not only the outdoor communication apparatus 2 but also that of the indoor communication apparatus 1 to become one in which they receive power from the solar cell 23a. That is, based on the control from the control circuit 21, such a control is performed by the power supply selection circuit 22a as to close the switch 2b, superimpose the power from the solar cell 23a on the signal from the communication function 24 in the mixer 25, and transmit the power to the counterpart indoor communication apparatus 1 via the communication line 3. The switch 2c is kept to be opened and the switch 2a is kept to be closed.
   On the other hand, the indoor communication apparatus 1 that has sent back the response signal that requests power transmission from the solar cell 23a performs control, at a timing substantially the same as the timing when the switch 2b is closed in the counterpart outdoor communication apparatus 2, based on the control from the control circuit 11, to close the switch 1c, open the switch 1a, and switch the state in which the power from the indoor power supply 13 is selected to the state in which the power transmitted from the outdoor communication apparatus 2 via the communication line 3 is selected as the operating power supply by the power supply selection circuit 12a. The switch 1b is kept to be opened.
   That is, the communication function 14, the mixer 15, and the ODU switch 18 in the indoor communication apparatus 1 start to operate by the power output from the first voltage sensor 16 via the power supply selection circuit 12a. The control circuit 11 in the indoor communication apparatus 1 operates by the power that is directly output from the first voltage sensor 16.
   As a result, both the indoor communication apparatus 1 and the outdoor communication apparatus 2 are set to the state in which the power from the solar cell 23a is used as the operating power supply.
   When the indoor power supply 13 has also reached the power level where both the indoor communication apparatus 1 and the outdoor communication apparatus 2 can be concurrently operated in addition to the solar cell 23a, an operation different from that described above is performed. That is, in this case, the indoor communication apparatus 1 may select one of the solar cell 23a and the indoor power supply 13 as the operating power supply in a predetermined order.
(4) After that, when the second voltage sensor 17 has detected that the amount of power of the indoor power supply 13 has been decreased to the level where only the indoor communication apparatus 1 can be operated,
   the control circuit 11 of the indoor communication apparatus 1 first outputs to the communication function 14 a control signal to instruct the communication function 14 to generate a notification signal to send a notification indicating that the amount of power of the indoor power supply 13 has been decreased to the level where only the indoor communication apparatus 1 can be operated to set back the state of the indoor communication apparatus 1 so that the indoor communication apparatus 1 operates by the power from the indoor power supply 13, not by the power from the communication line 3. The communication function 14 that has received the control signal generates the notification signal instructed by the control circuit 11 and sends the notification signal to the counterpart outdoor communication apparatus 2 via the mixer 15 and the communication line 3.
   The communication function 24 of the outdoor communication apparatus 2 that has received the notification signal from the indoor communication apparatus 1 via the communication line 3 and the mixer 25 transfers the notification signal to the control circuit 21. The control circuit 21 checks whether it is ready to stop the power from the solar cell 23a that has transmitted power to the communication line 3. When it is confirmed that the power supply can be stopped without any problem, the control circuit 21 outputs to the communication function 24 a control signal to instruct the communication function 24 to generate a response signal indicating that the power transmission from the solar cell 23a can be stopped. The communication function 24 that has received the control signal generates the response signal instructed by the control circuit 21 and sends back the response signal to the counterpart indoor communication apparatus 1 via the mixer 25 and the communication line 3.
   The communication function 14 of the indoor communication apparatus 1 that has received the response signal from the outdoor communication apparatus 2 via the communication line 3 and the mixer 15 transfers the response signal to the control circuit 11. The control circuit 11 that has received the response signal switches the power supply that supplies power to the indoor communication apparatus 1 from the power from the communication line 3 to the power from the indoor power supply 13 as the operating power supply. That is, based on the control by the control circuit 11, such a control is performed by the power supply selection circuit 12a as to close the switch 1a, open the switch 1c, and select the power from the indoor power supply 13 as the operating power supply. The switch 1b is kept to be opened.
   In summary, the communication function 14, the mixer 15, and the ODU switch 18 in the indoor communication apparatus 1 are to be operated by the power output from the second voltage sensor 17 via the power supply selection circuit 12a. The control circuit 11 in the indoor communication apparatus 1 operates by the power directly output from the second voltage sensor 17.
   On the other hand, the outdoor communication apparatus 2 that has sent back the response signal indicating that the power transmission from the solar cell 23a can be stopped performs control, based on the control from the control circuit 21, to open the switch 2b and stop the operation for transmitting the power from the solar cell 23a via the communication line 3 by the power supply selection circuit 22a at a timing substantially the same as the timing when the switch 1c is opened in the counterpart indoor communication apparatus 1. The switch 2c is kept to be opened and the switch 2a is kept to be closed.
   That is, the communication function 24 and the mixer 25 in the outdoor communication apparatus 2 are kept to be the state in which they are operated by the power output from the second voltage sensor 27 via the power supply selection circuit 22a. The control circuit 21 in the outdoor communication apparatus 2 is kept to be the state in which it is operated by the power directly output from the second voltage sensor 27.
   As a result, the indoor communication apparatus 1 and the outdoor communication apparatus 2 are respectively set to the states in which the power from the first power supply of the indoor communication apparatus, i.e., the power from the indoor power supply 13, and the power from the solar cell 23a are used as the operating power supply.
(5) After that, when it is detected by the second voltage sensor 17 that the amount of power of the indoor power supply 13 has been increased from the level where only the indoor communication apparatus 1 can be operated to the level where the indoor communication apparatus 1 and the outdoor communication apparatus 2 can be concurrently operated,
   the control circuit 11 of the indoor communication apparatus 1 outputs to the communication function 14 a control signal to instruct the communication function 14 to generate a notification signal to send a notification indicating that the amount of power of the indoor power supply 13 has reached the level where both the indoor communication apparatus 1 and the outdoor communication apparatus 2 can be concurrently operated to set back the state of the indoor communication apparatus 1 so that the indoor communication apparatus 1 operates by the power from the communication line 3, not by the power from the indoor power supply 13. The communication function 14 that has received the control signal generates the notification signal instructed by the control circuit 11 and sends the notification signal to the counterpart outdoor communication apparatus 2 via the mixer 15 and the communication line 3.
   The communication function 24 of the outdoor communication apparatus 2 that has received the notification signal from the indoor communication apparatus 1 via the communication line 3 and the mixer 25 transfers the notification signal to the control circuit 21. The control circuit 21 checks whether it is ready to re-start the operation for transmitting the power from the solar cell 23a that has been stopped to the communication line 3. When it is confirmed that the operation can be re-started without any problem, the control circuit 21 outputs to the communication function 24 a control signal to instruct the communication function 24 to generate a response signal indicating that the power transmission from the solar cell 23a can be re-started. The communication function 24 that has received the control signal generates the response signal instructed by the control circuit 21 and sends back the response signal to the counterpart indoor communication apparatus 1 via the mixer 25 and the communication line 3.
   The communication function 14 of the indoor communication apparatus 1 that has received the response signal from the outdoor communication apparatus 2 via the communication line 3 and the mixer 15 transfers the response signal to the control circuit 11. The control circuit 11 that has received the response signal switches the power supply that supplies power to the indoor communication apparatus 1 from the power from the indoor power supply 13 to the power from the communication line 3 as the operating power supply. That is, based on the control by the control circuit 11, the power supply selection circuit 12a performs control to close the switch 1c, open the switch 1a, and select the power from the communication line 3 as the operating power supply. The switch 1b is kept to be opened.
   In summary, the communication function 14, the mixer 15, and the ODU switch 18 in the indoor communication apparatus 1 are to be operated by the power output from the first voltage sensor 16 via the power supply selection circuit 12a. The control circuit 11 in the indoor communication apparatus 1 operates by the power directly output from the first voltage sensor 16.
   On the other hand, the outdoor communication apparatus 2 that has sent back the response signal indicating that the power transmission from the solar cell 23a can be re-started performs control, based on the control from the control circuit 21, to close the switch 2b and allow the re-start of the operation for transmitting the power from the solar cell 23a via the communication line 3 by the power supply selection circuit 22a at a timing substantially the same as the timing when the switch 1c is closed in the counterpart indoor communication apparatus 1. The switch 2c is kept to be opened and the switch 2a is kept to be closed.
   That is, the communication function 24 and the mixer 25 in the outdoor communication apparatus 2 are kept to be the state in which they are operated by the power output from the second voltage sensor 27 via the power supply selection circuit 22a. The control circuit 21 in the outdoor communication apparatus 2 is kept to be the state in which it is operated by the power directly output from the second voltage sensor 27.
   As a result, both the indoor communication apparatus 1 and the outdoor communication apparatus 2 are set to the states in which they are operated using the power from the solar cell 23a as the operating power supply.
(6) After that, when the second voltage sensor 27 detects that the power generation amount in the solar cell 23a has been decreased from the level where the outdoor communication apparatus 2 and the indoor communication apparatus 1 can be concurrently operated to the level where only the outdoor communication apparatus 2 can be operated,
   the control circuit 21 of the outdoor communication apparatus 2 outputs to the communication function 24 a control signal to instruct the communication function 24 to generate a notification signal for sending a notification indicating that the power generation amount in the solar cell 23a has been decreased to the level where the indoor communication apparatus 1 cannot be concurrently operated with the outdoor communication apparatus 2. The communication function 24 that has received the control signal generates the notification signal indicated by the control circuit 21 and sends the notification signal to the counterpart indoor communication apparatus 1 via the mixer 25 and the communication line 3.
   The communication function 14 of the indoor communication apparatus 1 that has received the notification signal from the outdoor communication apparatus 2 via the communication line 3 and the mixer 15 transfers the notification signal to the control circuit 11. The control circuit 11 checks whether it is ready to switch the power supply that supplies power from the power from the communication line 3 to the power from the indoor power supply 13. When it is confirmed that the power supply can be switched without any problem, the control circuit 11 outputs a control signal to instruct the generation of the response signal indicating the power transmission from the solar cell 23a can be stopped to the communication function 14. The communication function 14 that has received the control signal generates a response signal indicated by the control circuit 11 and sends back the response signal to the counterpart outdoor communication apparatus 2 via the mixer 15 and the communication line 3.
   The communication function 24 of the outdoor communication apparatus 2 that has received the response signal from the indoor communication apparatus 1 via the communication line 3 and the mixer 25 transfers the response signal to the control circuit 21. The control circuit 21 that has received the response signal stops power transmission to the indoor communication apparatus 1 from the solar cell 23a and allows the power from the solar cell 23a to be supplied to only the outdoor communication apparatus 2. That is, based on the control from the control circuit 21, the power supply selection circuit 22a performs control to open the switch 2b and allow the stop of the operation of transmitting the power from the solar cell 23a to the counterpart indoor communication apparatus 1. The switch 2c is kept to be opened, the switch 2a is kept to be closed, and the outdoor communication apparatus 2 keeps the state in which it selects the power from the solar cell 23a as the operating power supply for the operation of the outdoor communication apparatus 2.
   On the other hand, the indoor communication apparatus 1 that has sent back the response signal indicating that the power transmission from the solar cell 23a can be stopped performs control, based on the control by the control circuit 11, to close the switch 1a, open the switch 1c, and switch the state in which the power transmitted from the outdoor communication apparatus 2 via the communication line 3 is selected to the state in which the power from the indoor power supply 13 is selected as the operating power supply by the power supply selection circuit 12a at a timing substantially the same as the timing when the switch 2b is opened in the counterpart outdoor communication apparatus 2.
   That is, the communication function 14, the mixer 15, and the ODU switch 18 in the indoor communication apparatus 1 are to be operated by the power output from the second voltage sensor 17 via the power supply selection circuit 12a. The control circuit 11 in the indoor communication apparatus 1 operates by the power directly output from the second voltage sensor 17.
   As a result, the indoor communication apparatus 1 and the outdoor communication apparatus 2 are respectively set to the states in which they are operated by the power from the first power supply of the indoor communication apparatus, i.e., the power from the indoor power supply 13, and the power from the solar cell 23a as the operating power supply.
   While the switch 1b can be kept to be opened, when the indoor power supply 13 is a stable power supply that consumes a small amount of power, in case of an abrupt decrease of the power generation amount in the solar cell 23a, the switch 1b may be closed and power can be transmitted in advance to the counterpart outdoor communication apparatus 2 via the communication line 3 if the amount of power of the indoor power supply 13 has reached the level where both the indoor communication apparatus 1 and the outdoor communication apparatus 2 can be concurrently operated.
(7) After that, when it is detected in the second voltage sensor 27 that the power generation amount in the solar cell 23a has been decreased from the level where only the outdoor communication apparatus 2 can be operated to the level where even only the outdoor communication apparatus 2 can no longer be operated,
   the control circuit 21 of the outdoor communication apparatus 2 first outputs to the communication function 24 a control signal to instruct the communication function 24 to generate a notification signal to send a notification indicating that the power generation amount in the solar cell 23a has been decreased to the level where even only the outdoor communication apparatus 2 can no longer be operated. The communication function 24 that has received the control signal generates the notification signal instructed by the control circuit 21 and sends the notification signal to the counterpart indoor communication apparatus 1 via the mixer 25 and the communication line 3.

The communication function 14 of the indoor communication apparatus 1 that has received the notification signal from the outdoor communication apparatus 2 via the communication line 3 and the mixer 15 transfers the notification signal to the control circuit 11. The control circuit 11 checks whether the amount of power of the indoor power supply 13 has recovered to the amount of power where the indoor communication apparatus 1 and the outdoor communication apparatus 2 can be concurrently supplied with power. When it is confirmed that the amount of power of the indoor power supply 13 has recovered to the state where the power can be transmitted also to the outdoor communication apparatus 2 via the communication line 3 without any problem, the control circuit 11 outputs to the communication function 14 a control signal to instruct the communication function 14 to generate a response signal indicating that the power transmission from the indoor power supply 13 can be started. The communication function 14 that has received the control signal generates the response signal indicated by the control circuit 11 and sends back the response signal to the counterpart outdoor communication apparatus 2 via the mixer 15 and the communication line 3.

The communication function 24 of the outdoor communication apparatus 2 that has received the response signal from the indoor communication apparatus 1 via the communication line 3 and the mixer 25 transfers the response signal to the control circuit 21. The control circuit 21 that has received the response signal stops the operation for supplying the power from the solar cell 23a and allows the supply of the power transmitted from the indoor communication apparatus 1 via the communication line 3. That is, based on the control from the control circuit 21, the power supply selection circuit 22a performs control to close the switch 2c, open the switch 2a, and switch the state in which the power from the solar cell 23a is selected to the state in which the power transmitted from the indoor communication apparatus 1 via the communication line 3 is selected as the operating power supply. The switch 2b is kept to be opened.

That is, the communication function 24 and the mixer 25 in the outdoor communication apparatus 2 are to be operated by the power output from the first voltage sensor 26 via the power supply selection circuit 22a. The control circuit 21 in the outdoor communication apparatus 2 operates by the power that is directly output from the first voltage sensor 26.

Meanwhile, the indoor communication apparatus 1 that has sent back the response signal indicating that the power transmission from the indoor power supply 13 will be started performs control, based on the control by the control circuit 11, to close the switch 1b and select the state in which the power from the indoor power supply 13 is transmitted to the counterpart outdoor communication apparatus 2 via the communication line 3 by the power supply selection circuit 12a at a timing substantially the same as the timing when the switch 2c is closed in the counterpart outdoor communication apparatus 2. As described above, the switch 1b may have already been closed in some cases. The switch 1c is kept to be opened and the switch 1a is kept to be closed and the indoor communication apparatus 1 keeps the state in which the power from the indoor power supply 13 is selected as the operating power supply for the operation of the indoor communication apparatus 1.

That is, the communication function 14, the mixer 15, and the ODU switch 18 in the indoor communication apparatus 1 keep the state in which they are operated by the power output from the second voltage sensor 17 via the power supply selection circuit 12a. The control circuit 11 in the indoor communication apparatus 1 operates by the power directly output from the second voltage sensor 17.

As a result, both the indoor communication apparatus 1 and the outdoor communication apparatus 2 are set to the states in which the power from the indoor power supply 13 is used as the operating power supply.

Further, in the configuration example of the communication system shown in Figs. 6A and 6B, besides the functions described above, the ODU switch 18 to instruct to stop the operation of the communication function 24 of the counterpart outdoor communication apparatus 2 and to cancel the stop of the operation of the communication function 24 is included in the indoor communication apparatus 1. When the control circuit 11 detects that the ODU switch 18 has been pressed in the indoor communication apparatus 1, the control signal to promote generation of a stop indication signal to instruct the stop of the operation of the communication function 24 of the counterpart outdoor communication apparatus 2 is output to the communication function 14. The communication function 14 that has received the control signal generates the stop indication signal instructed by the control circuit 11 and sends the stop indication signal to the counterpart outdoor communication apparatus 2 via the mixer 15 and the communication line 3.

The communication function 24 of the outdoor communication apparatus 2 that has received the stop indication signal from the indoor communication apparatus 1 via the communication line 3 and the mixer 25 transfers the stop indication signal to the control circuit 21. When the control circuit 21 confirms that the received signal is the indication to stop the operation of the communication function 24, the control circuit 21 sets both the switches 2a and 2c of the power supply selection circuit 22a to the opened state and stops the power supply to the communication function 24 and the mixer 25 to stop the operation of the communication function 24.

In such a state, the control circuit 21 can be operated by receiving the power from the communication line 3 directly output from the first voltage sensor 26 or the power from the solar cell 23a directly output from the second voltage sensor 27. Further, the first voltage sensor 26 is electrically connected to the communication line 3 where the signal and the power can be superimposed with each other without the intervention of the mixer 25, the control circuit 21 can be operated by the power from the first voltage sensor 26, and the control circuit 21 is able to directly exchange signals with the counterpart indoor communication apparatus 1 via the first voltage sensor 26. Therefore, the control circuit 21 is able to generate the response signal indicating that the operation of the communication function 24 has been stopped based on the stop indication signal that the control circuit 21 has received and directly send the response signal back to the indoor communication apparatus 1 from the first voltage sensor 26 via the communication line 3.

After that, when the ODU switch 18 is pressed again in the indoor communication apparatus 1, the control circuit 11 generates a stop cancel signal to cancel the stop of the operation of the communication function 24 of the counterpart outdoor communication apparatus 2 and sends the stop cancel signal to the counterpart outdoor communication apparatus 2 via the communication line 3.

The control circuit 21 of the outdoor communication apparatus 2 that has received from the first voltage sensor 26 the stop cancel signal sent from the indoor communication apparatus 1 via the communication line 3 and the mixer 25 is recovered to the state in which the operating power supply according to the power state when the first voltage sensor 26 and the second voltage sensor 27 have detected is selected.

According to the above operation, the indoor communication apparatus 1 and the outdoor communication apparatus 2 work together to select one of the indoor power supply 13 and the solar cell 23a as the operating power supply more appropriately based on the result of monitoring the power from the indoor power supply 13 and the solar cell 23a, whereby the indoor communication apparatus 1 and the outdoor communication apparatus 2 can operate continuously.

The operation for selecting the power supply route in the indoor communication apparatus 1 and the outdoor communication apparatus 2 having the internal configurations in Figs. 5A, 5B, 6A, and 6B is not limited to the aforementioned operation. That is, in the communication system composed of communication apparatuses corresponding to a plurality of functions (e.g., the indoor communication apparatus 1 and the outdoor communication apparatus 2) that are divided from each other, based on a predetermined communication apparatus, the power supply route of each communication apparatus that constitutes the communication system can be controlled according to the state of the amount of power input from a power supply located near the communication apparatus or a power supply included in the communication apparatus (the amount of power input from the power input mechanism).

In the internal configurations shown in Figs. 6A and 6B, for example, when the indoor communication apparatus 1 which is located near a power supply that most stably supplies the power is selected as the predetermined communication apparatus and the amount of power of the indoor power supply 13 located near the indoor communication apparatus 1 and connected to the indoor communication apparatus 1 has reached the level where both the indoor communication apparatus 1 and the outdoor communication apparatus 2 can be concurrently operated, regardless of the power generation amount in the solar cell 23a, which is one example of the outdoor power supply 23, the indoor power supply 13 may be used to operate both the indoor communication apparatus 1 and the outdoor communication apparatus 2.

Alternatively, even when the amount of power of the indoor power supply 13 has reached the level where both the indoor communication apparatus 1 and the outdoor communication apparatus 2 can be concurrently operated, if the power generation amount in the solar cell 23a, which is one example of the outdoor power supply 23, has reached the level where only the outdoor communication apparatus 2 can be operated or a level higher than this level, the indoor communication apparatus 1 may be operated using the indoor power supply 13 and the outdoor communication apparatus 2 may be operated using the solar cell 23a, which is one example of the outdoor power supply 23 instead of operating both the indoor communication apparatus 1 and the outdoor communication apparatus 2 using the indoor power supply 13.

Further, when the amount of power of the indoor power supply 13 has been decreased to the level where only the indoor communication apparatus 1 can be operated, if the power generation amount in the solar cell 23a, which is one example of the outdoor power supply 23, has reached the level where only the outdoor communication apparatus 2 can be operated or a level higher than this level, the indoor communication apparatus 1 may be operated using the indoor power supply 13 and the outdoor communication apparatus 2 may be operated using the solar cell 23a, which is one example of the outdoor power supply 23. Further, in case of a further decrease in the amount of power of the indoor power supply 13, when the solar cell 23a, which is one example of the outdoor power supply 23, is in the state in which it is possible to supply the power not only to the outdoor communication apparatus 2 but also to the indoor communication apparatus 1, such a configuration may be set in advance to transmit the power from the solar cell 23a to the indoor communication apparatus 1 on the communication line 3.

However, when the amount of power of the indoor power supply 13 has been decreased to the level where even the operation of only the indoor communication apparatus 1 is no longer possible, and the power generation amount in the solar cell 23a, which is one example of the outdoor power supply 23, has reached the level where both the outdoor communication apparatus 2 and the indoor communication apparatus 1 can be concurrently operated, the power supply that supplies power may be immediately switched to the power from the solar cell 23a to operate the indoor communication apparatus 1 and both the indoor communication apparatus 1 and the outdoor communication apparatus 2 may be concurrently operated using the solar cell 23a.

Further, while the configuration example of the communication system when two power supplies of one indoor power supply and one outdoor power supply are used has been described in the above description, the present invention is not limited to the case in which two power supplies are used. Needless to say, the present invention can be suitably applied to a communication system composed of a plurality of communication devices located in the respective positions of a plurality of power supplies that are dispersed as a network device in an environment in which the plurality of power supplies are dispersed.

The configurations according to the preferred exemplary embodiments of the present invention have been described above. It should be noted, however, the above exemplary embodiments are merely examples of the present invention and do not limit the present invention. Those skilled in the art will easily understand that the above exemplary embodiments may be changed in various ways according to specific applications without departing from the spirit of the present invention.

While the present invention has been described as a hardware configuration in the above exemplary embodiments, the present invention is not limited to the hardware configuration. The present invention can achieve arbitrary processing by causing a central processing unit (CPU) to execute a computer program. The program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

While the present invention has been described with reference to the exemplary embodiments, the present invention is not limited to the exemplary embodiments stated above. Various changes that can be understood by those skilled in the art may be made on the configurations and the details of the present invention within the scope of the present invention.

This application is based upon and claims the benefit of priority from Japanese Patent Application No. 2013-109019, filed on May 23, 2013, the disclosure of which is incorporated herein in its entirety by reference.

### Reference Signs List

- 1: INDOOR COMMUNICATION APPARATUS
- 1a: SWITCH
- 1b: SWITCH
- 1c: SWITCH
- 2: OUTDOOR COMMUNICATION APPARATUS
- 2a: SWITCH
- 2b: SWITCH
- 2c: SWITCH
- 3: COMMUNICATION LINE
- 3a: COMMUNICATION LINE
- 11: CONTROL CIRCUIT
- 12: POWER SUPPLY SELECTION CIRCUIT
- 12a: POWER SUPPLY SELECTION CIRCUIT
- 13: INDOOR POWER SUPPLY
- 13a: POWER SUPPLY
- 14: COMMUNICATION FUNCTION
- 15: MIXER
- 16: FIRST VOLTAGE SENSOR
- 17: SECOND VOLTAGE SENSOR
- 18: ODU SWITCH
- 21: CONTROL CIRCUIT
- 22: POWER SUPPLY SELECTION CIRCUIT
- 22a: POWER SUPPLY SELECTION CIRCUIT
- 23: OUTDOOR POWER SUPPLY
- 23a: SOLAR CELL
- 24: COMMUNICATION FUNCTION
- 25: MIXER
- 26: FIRST VOLTAGE SENSOR
- 27: SECOND VOLTAGE SENSOR
- 28: BOOSTER CIRCUIT
- 31: COMMUNICATION APPARATUS
- 32: COMMUNICATION APPARATUS
- 33: COMMUNICATION APPARATUS
- 41: POWER SUPPLY
- 42: POWER SUPPLY
- 43: POWER SUPPLY
- 51: COMMUNICATION APPARATUS
- 61: BATTERY WITH COMMUNICATION FUNCTION
- 101: INDOOR COMMUNICATION APPARATUS
- 102: OUTDOOR COMMUNICATION APPARATUS
- 103: COMMUNICATION LINE
- 104: POWER SUPPLY SELECTION CIRCUIT
- 105: INDOOR POWER SUPPLY
- 106: OUTDOOR POWER SUPPLY
- 107: POWER SUPPLY LINE

## Claims

1. A communication system comprising a first communication apparatus and a second communication apparatus that are connected to each other via a communication line that exchanges a signal, wherein:
each of the first communication apparatus and the second communication apparatus is connected to a first power supply, which is a power supply included therein or an external power supply located nearby and includes a power transmission mechanism that superimposes power on the signal in the communication line and transmits the power that is superimposed to a counterpart communication apparatus via the communication line as a second power supply, and
the first communication apparatus and the second communication apparatus select one of the power from the first power supply and the power from the second power supply transmitted from the counterpart communication apparatus via the communication line as an operating power supply according to a state of the power in each of the first power supply and the second power supply and are supplied with the power that has been selected.

2. The communication system according to Claim 1, wherein each of the first communication apparatus and the second communication apparatus transmits, by the power transmission mechanism, when the amount of power from the first power supply of one communication apparatus has reached the level where one communication apparatus and the counterpart communication apparatus can be concurrently operated, the power from the first power supply of one communication apparatus to the counterpart communication apparatus as the second power supply via the communication line in such a way that the power is superimposed on the signal and further selects the power from the first power supply of one communication apparatus as the operating power supply and is supplied with the power that has been selected, or when the power has been transmitted from the counterpart communication apparatus as the second power supply via the communication line, selects one of the power from the first power supply of one communication apparatus and the power transmitted from the counterpart communication apparatus as the second power supply via the communication line as the operating power supply in a predetermined order and is supplied with the power that has been selected.

3. The communication system according to Claim 1 or 2, wherein each of the first communication apparatus and the second communication apparatus selects, when the amount of power supplied from the first power supply of one communication apparatus has reached the level where only one communication apparatus can be operated although it is not sufficient to concurrently operate both one communication apparatus and the counterpart communication apparatus, the power from the first power supply of one communication apparatus as the operating power supply and is supplied with the power that has been selected.

4. The communication system according to any one of Claims 1 to 3, wherein each of the first communication apparatus and the second communication apparatus selects, when the amount of power supplied from the first power supply has reached the level where only one communication apparatus can be operated although it is not sufficient to concurrently operate one communication apparatus and the counterpart communication apparatus in one communication apparatus and the amount of power from the first power supply has reached the level where both one communication apparatus and the counterpart communication apparatus can be concurrently operated in the counterpart communication apparatus, the power transmitted from the counterpart communication apparatus as the second power supply via the communication line as the operating power supply and is supplied with the power that has been selected.

5. The communication system according to any one of Claims 1 to 4, wherein each of the first communication apparatus and the second communication apparatus selects, when the amount of power supplied from the first power supply of one communication apparatus has been decreased to the level where even only one communication apparatus can no longer be operated, the power transmitted from the counterpart communication apparatus as the second power supply via the communication line as the operating power supply and is supplied with the power that has been selected.

6. The communication system according to any one of Claims 1 to 5, wherein when the amount of power supplied from the first power supply in a communication apparatus that is predetermined as a specific communication apparatus from the first communication apparatus and the second communication apparatus has reached the level where both one communication apparatus and the counterpart communication apparatus can be concurrently operated, the counterpart communication apparatus selects, regardless of the amount of power from the first power supply in one communication apparatus, the power that has been transmitted from the specific counterpart communication apparatus via the communication line as the second power supply as the operating power supply and is supplied with the power that has been selected.

7. The communication system according to any one of Claims 1 to 6, wherein the communication apparatus that is predetermined as the specific communication apparatus from the first communication apparatus and the second communication apparatus includes an operation switch, and the communication system sends a signal to stop the operation of the communication function of the counterpart communication apparatus and to cancel the stop of the operation of the communication function of the counterpart communication apparatus via the communication line by an operation of the operation switch.

8. The communication system according to any one of Claims 1 to 7, wherein the first communication apparatus is an indoor communication apparatus that is installed indoors and the second communication apparatus is an outdoor communication apparatus that is installed outdoors.

9. A power supply control method in a communication system comprising a first communication apparatus and a second communication apparatus that are connected to each other via a communication line that exchanges a signal, wherein:
each of the first communication apparatus and the second communication apparatus is connected to a first power supply, which is a power supply included therein or an external power supply located nearby, superimposes power on the signal in the communication line, and transmits the power that is superimposed to a counterpart communication apparatus via the communication line as a second power supply, and
the first communication apparatus and the second communication apparatus select one of the power from the first power supply and the power transmitted from the counterpart communication apparatus via the communication line as an operating power supply according to a state of the power in each of the first power supply and the second power supply and are supplied with the power that has been selected.

10. A power supply control non-transitory computer readable medium that executes the power supply control method according to Claim 9 as a non-transitory computer readable medium that can be executed by a computer.
